# EUROPÄISCHE PATENTANMELDUNG

(11) **EP 4 675 184 A1**
(43) Veröffentlichungstag der Anmeldung: **07.01.2026**
(21) Anmeldenummer: 25181524.7
(22) Anmeldetag: 06.06.2025
(51) Int. Cl.: F24C 15/20, B01D 46/12, B01D 46/58

(54) **GERUCHSFILTEREINHEIT FÜR DUNSTABZUGSVORRICHTUNG**

(30) Priorität: 02.07.2024 DE 102024206186
(71) Anmelder: BSH Hausgeräte GmbH, 81739 München (DE)
(72) Erfinder: Herbst, Jens, 75015 Bretten (DE); Kateb, Adnen, 76133 Karlsruhe (DE); Driedger, Benjamin, 76356 Weingarten (Baden) (DE); Schopp, Daniel, 74374 Zaberfeld (DE)

(57) **Zusammenfassung**

Die Erfindung stellt eine Geruchsfiltereinheit (10) für eine Dunstabzugsvorrichtung (50) bereit, die ein steifes erstes Filtersegment (12), ein steifes zweites Filtersegment (22), und ein reversibel verformbares Verbindungselement (30) umfasst. Das reversibel verformbaren Verbindungselement (30) erstreckt sich zwischen dem ersten Filtersegment (12) und dem zweiten Filtersegment (22) und verbindet beide miteinander und relativ zueinander beweglich.

## Beschreibung

Die vorliegende Erfindung betrifft eine Geruchsfiltereinheit nach Anspruch 1, eine Dunstabzugsvorrichtung nach Anspruch 9, eine Dunstabzugshaube nach Anspruch 13 und einen Muldenlüfter nach Anspruch 14.

Dunstabzüge können üblicherweise in einem Umluftbetrieb betrieben werden, bei dem ein Wrasen bzw. Kochdünste mithilfe eines Geruchsfilters gefiltert werden. Hierbei sollen insbesondere Geruchsstoffe abgeschieden werden. Bei einer Durchströmung des Geruchsfilters tritt ein Druckverlust auf, welcher möglichst minimiert werden sollte, um einen Energiebedarf eines Gebläses des Dunstabzugs gering zu halten und zudem bei der Durchströmung auftretende Geräusche möglichst zu vermeiden.

Der Geruchsfilter kann beispielsweise durch einen Aktivkohlefilter gebildet sein. Die Kapazität des Geruchsfilters, die Geruchsstoffe abzuscheiden, ist dabei von der im Geruchsfilter vorhandenen Aktivkohlemenge abhängig. Die notwendige Größe des als Aktivkohlefilter ausgebildeten Geruchsfilters bestimmt sich aus einem zu erreichenden Druckverlust sowie der vorgesehenen Aktivkohlemenge. Soll ein bestimmter maximale Druckverlust eingehalten werden, ist ein entsprechender Bauraum in einem Dunstabzug vorzusehen.

Bei einer Ausführung des Dunstabzugs als Muldenabzug, der auch Muldenlüfter, Kochfelddunstabzug oder Downdraft-Dunstabzug bezeichnet wird, ist ein Abzug neben einem Kochfeld angeordnet oder in dieses integriert. Beispielsweise kann eine Kochfeldplatte oder eine Arbeitsplatte eine Absaugöffnung aufweisen, sodass der darunter angeordnete Dunstabzug den Wrasen nach unten absaugen kann. Bekannt sind Dunstabzüge, bei denen sowohl ein Fettfilter als auch ein Geruchsfilter durch die Absaugöffnung eingebracht und entnommen werden können. Da ein Bauraum unter dem Kochfeld oder unter einer Arbeitsplatte üblicherweise für einen Unterschrank verwendet wird, ist der Dunstabzug mit einer möglichst geringen Bauhöhe auszugestalten. Dies kann darin resultieren, dass insbesondere Geruchsfilter entfernt von der Absaugöffnung angeordnet sind und deren Entnahme zusätzlich erschwert ist. Der Fettfilter und der Geruchsfilter sollen jedoch üblicherweise durch einen Benutzer des Dunstabzugs entnehmbar sein. Eine einfache Möglichkeit der Entnahme des Fettfilters und des Geruchsfilters ist somit vorteilhaft für die Handhabung des Dunstabzugs durch den Benutzer.

Bei einer Ausführung des Dunstabzugs als Dunstabzugshaube ist der Geruchsfilter üblicherweise von unten aus einer Einbauposition zu entnehmen und einzubringen. Die Einbauposition kann hierbei für einen Benutzer nicht direkt ersichtlich sein. Beim Einbringen des Geruchsfilters kann es daher vorkommen, dass dieser nicht korrekt in die Einbauposition gebracht wird. Im Betrieb der Dunstabzugshaube kann dadurch eine Fehlluft auftreten, welche ungewollt an dem Geruchsfilter vorbeiströmt. Die Fehlluft bleibt damit ungefiltert. Um eine solche Fehlluft zu vermeiden, ist ein korrektes Einbringen des Geruchsfilters in die Dunstabzugshaube sicherzustellen.

Aus DE 10 2021 206 126 A1 ist eine Filtereinheit mit sequenziell zusammengefügten Fettfiltern bekannt, welche mittels Gelenken an ihrem äußeren Rahmen aneinander befestigt sind, sodass sich die Fettfilter für die Entnahme relativ zueinander drehen lassen.

Aus EP 3 375 506 A2 ist ein Filtersystem zum Auffangen von Staub und Dämpfen, welche bei industriellen Prozessen entstehen, bekannt. Das Filtersystem umfasst eine erste Filterplatte und eine zweite Filterplatte, die mit der ersten Filterplatte durch ein Filmscharnier flexibel verbunden ist.

Aus DE 20 2018 006 525 U1 ist ein reversibel verformbarer Geruchsfilter bekannt. Der Geruchsfilter hat einen biegeweichen Filterrahmen und ist torsionsweich ausgebildet. Der Geruchsfilter kann dabei zwei reversibel aneinander anbringbare Filtersegmente umfassen, die insbesondere mit einem Band und/oder einer Schnur verlagerbar verbunden sind, um eine einfache Entnahme des Geruchsfilters aus einem Filtersitz eines Dunstabzugs zu gewährleisten.

Der Erfindung liegt insbesondere aber nicht beschränkt darauf die Aufgabe zugrunde, eine Geruchsfiltereinheit für eine Dunstabzugsvorrichtung vorteilhaft weiterzuentwickeln. Die Aufgabe wird gelöst durch die Merkmale der Ansprüche 1, 9, 13 und 14, während bevorzugte Ausgestaltungen und Weiterentwicklungen der Erfindung den Unteransprüchen und der Beschreibung zu entnehmen sind.

Es wird vorgeschlagen eine Geruchsfiltereinheit für eine Dunstabzugsvorrichtung mit einem steifen ersten Filtersegment, einem steifen zweiten Filtersegment und einem reversibel verformbaren Verbindungselement vorzusehen, welches sich zwischen dem ersten Filtersegment und dem zweiten Filtersegment erstreckt und beide miteinander und relativ zueinander beweglich verbindet.

Hierdurch kann eine vorteilhaft weiterentwickelte Geruchsfiltereinheit bereitgestellt werden. Insbesondere kann die Geruchsfiltereinheit in eine kompakt ausgestaltete Dunstabzugsvorrichtung, welche enge Räume aufweist, eingebracht und entnommen werden. Durch das Verbinden von Filtersegmenten bzw. das Aneinanderketten von Filtersegmenten kann insbesondere ein Filtersegment, das sich an einer schwierig erreichbaren Stelle innerhalb der Dunstabzugsvorrichtung befindet, durch Ziehen an einem einfacher erreichbaren Filtersegment entnommen werden. Das reversibel verformbare Verbindungselement stellt eine Verformbarkeit der Geruchsfiltereinheit bereit, welche das Einbringen in die Dunstabzugsvorrichtung und das Entnehmen aus der Dunstabzugsvorrichtung vereinfacht oder sogar erst ermöglicht. Die durch das Verbindungselement verbundenen steifen Filtersegmente erleichtern zudem das Einbringen der Geruchsfiltereinheit in die Dunstabzugsvorrichtung. Hierbei kann ein Benutzer die Geruchsfiltereinheit beispielsweise in die Dunstabzugsvorrichtung einschieben und bekommt durch die steife Ausführung eine direkte haptische Rückmeldung, ob beispielsweise ein Verkanten oder ein anderer Widerstand auftritt. Die vorteilhaft weiterentwickelte Geruchsfiltereinheit verbessert also insgesamt den Benutzerkomfort beim Einbringen und Entnehmen der Geruchsfiltereinheit aus der Dunstabzugsvorrichtung.

Die Filtersegmente sind insbesondere zur Abscheidung von Geruchsstoffen aus dem Wrasen geeignet. Der Begriff "steif" bezieht sich auf bei herkömmlichen Geruchsfiltern für Dunstabzüge übliche Toleranzen und/oder Materialeigenschaften. Die Filtersegmente können steif im Sinne von biegesteif und/oder torsionssteif sein. Biegesteif kann bedeuten, dass eine maximale Durchbiegung von 10 mm, vorzugsweise 5 mm, besonders bevorzugt 1 mm erlaubt ist. Torsionssteif kann bedeuten, dass eine maximale Verdrehung von 15°, vorzugsweise 10° und besonders bevorzugt 5° erlaubt ist. Das erste Filtersegment und das zweite Filtersegment sind vorzugsweise baugleich, um eine Herstellung der Geruchsfiltereinheit zu vereinfachen.

Das erste Filtersegment kann einen ersten Filterabschnitt und einen steifen ersten Filterrahmen, der den erste Filterabschnitt aufnimmt, aufweisen. Das zweite Filtersegment kann einen zweiten Filterabschnitt und einen steifen zweiten Filterrahmen, der den zweiten Filterabschnitt aufnimmt, aufweisen. Das Verbindungselement kann sich zwischen dem ersten Filterrahmen und dem zweiten Filterrahmen erstrecken und beide miteinander und relativ zueinander beweglich verbinden. Eine Steifigkeit der Filtersegmente kann somit durch einen steifen Filterrahmen bewerkstelligt sein, wodurch die Geruchsfiltereinheit einfach hergestellt werden kann. Der Begriff "steif" bezieht sich wiederum auf bei herkömmlichen Geruchsfiltern für Dunstabzüge übliche Toleranzen und/oder Materialeigenschaften. Die Filterrahmen können steif im Sinne von biegesteif und/oder torsionssteif sein. Biegesteif kann bedeuten, dass eine maximale Biegung von 10 mm, vorzugsweise 5 mm, besonders bevorzugt 1 mm erlaubt ist. Torsionssteif kann bedeuten, dass eine maximale Verdrehung von 15°, vorzugsweise 10° und besonders bevorzugt 5° erlaubt ist.

Der erste Filterabschnitt und/oder der zweite Filterabschnitt sind insbesondere dazu eingerichtet, Geruchsstoffe aus dem Wrasen abzuscheiden, wodurch beim Kochen entstehende unangenehme Gerüche beseitigt werden können. Der erste Filterabschnitt und/oder der zweite Filterabschnitt können jeweils einen Aktivkohlefilter aufweisen. Alternativ oder zusätzlich dazu können der erste Filterabschnitt und/oder der zweite Filterabschnitt jeweils einen Zeolith-Filter aufweisen Der erste Filterabschnitt und/oder der zweite Filterabschnitt können einen plissierten Abschnitt, insbesondere einen plissierten Aktivkohlefilter aufweisen. Als Aktivkohlefilter werden Filter bezeichnet, die Aktivkohle enthalten. Der Aktivkohlefilter ist insbesondere dazu eingerichtet, Geruchsstoffe aus dem Wrasen aufzunehmen. Die Geruchsfiltereinheit kann zusätzlich einen Feuchtigkeitsfilter und/oder einen Fettfilter aufweisen.

Der erste Filterrahmen und/oder der zweite Filterrahmen können den zugeordneten ersten oder zweiten Filterabschnitt vollständig umrahmen. Alternativ dazu können der erste Filterrahmen und/oder der zweite Filterrahmen den zugeordneten ersten und/oder zweiten Filterabschnitt teilweise umrahmen. Insbesondere können der erste Filterrahmen und/oder der zweite Filterrahmen jeweils U-förmig ausgebildet sein. Der U-förmig ausgebildete erste Filterrahmen und/oder der U-förmig ausgebildete zweite Filterrahmen können insbesondere jeweils zu einer dem anderen Filterrahmen zugewandten Seite hin offen sein. Hierbei können der erste Filterabschnitt und der zweite Filterabschnitt jeweils an einer dem anderen Filterabschnitt zugewandten Seite frei liegen oder das Verbindungselement kann an den ersten Filterabschnitt und/oder den zweiten Filterabschnitt angrenzen. Die Filterrahmen können die Filterabschnitt also je nach Anwendungsfall geeignet aufnehmen.

Das Verbindungselement verbindet das erste Filtersegment und das zweite Filtersegment zu einer Kette aus Filtersegmenten. Die Geruchsfiltereinheit kann weitere Filtersegmente und weitere Verbindungselemente aufweisen, wodurch die Kette aus Filtersegmenten beliebig verlängerbar ist. Das Verbindungselement kann eine oder mehrere Laschen aufweisen, wodurch die bewegliche Verbindung kostengünstig realisierbar ist. Das Verbindungselement kann alternativ oder zusätzlich dazu eine oder mehrere Schnüre aufweisen. Hierdurch können die Filtersegmente besonders beweglich zueinander verbunden werden. Das Verbindungselement kann einstückig mit dem ersten Filterrahmen und/oder mit dem zweiten Filterrahmen gebildet sein, wodurch eine besonders kompakte Geruchsfiltereinheit erreicht werden kann. Das Verbindungselement kann an dem ersten Filterrahmen und/oder an dem zweiten Filterrahmen befestigt sein. Das Befestigen des Verbindungselements mit den Filterrahmen kann ein flexibles Erweitern einer Kette aus Filtersegmenten der Geruchsfiltereinheit um weitere Filtersegmente und weitere Verbindungselemente zulassen.

Das Verbindungselement kann ein Festkörpergelenk zwischen dem ersten Filterrahmen und dem zweiten Filterrahmen bilden. Das Festkörpergelenk kann ungewollte Relativbewegungen zwischen den Filtersegmenten verhindern und dem Benutzer somit ein Einbringen der Geruchsfiltereinheit in die Abzugsvorrichtung erleichtern. Das Verbindungselement, der erste Filterrahmen und der zweite Filterrahmen können einstückig ausgebildet sein und zusammen ein Festkörpergelenk, insbesondere ein Filmscharnier, bilden. Das Verbindungselement kann den ersten Filterrahmen und den zweiten Filterrahmen insbesondere relativ zueinander schwenkbar verbinden.

Das erste Filtersegment und das zweite Filtersegment können lösbar miteinander verbunden sein. Die lösbare Verbindung zwischen den Filtersegmenten kann ein flexibles Erweitern oder Verkürzen einer Kette aus Filtersegmenten der Geruchsfiltereinheit um ein Filtersegment oder weitere Filtersegmente mit weiteren Verbindungselementen zulassen. Hierbei ist ebenso ein Austausch eines Filtersegments aus der Kette aus Filtersegmenten der Geruchsfiltereinheit denkbar. Insbesondere kann das Verbindungselement mit dem ersten Filterrahmen und/oder mit dem zweiten Filterrahmen lösbar verbunden sein. Das Verbindungselement kann beispielsweise mit dem ersten Filterrahmen und/oder mit dem zweiten Filterrahmen durch eine Schnappverbindung lösbar verbunden sein, wodurch für den Benutzer ein besonders einfaches Erweitern oder Verkürzen einer Kette von Filtersegmenten, oder Austauschen von Filtersegmenten aus einer Kette von Filtersegment möglich ist.

Zwischen dem ersten Filtersegment und dem zweiten Filtersegment kann ein Zwischenraum gebildet sein, den das Verbindungselement zumindest zu einer Seite hin verschließt. Das Verbindungselement verhindert also eine Strömung durch den Zwischenraum in zumindest einer Richtung. Hierdurch kann eine Fehlluft, welche die Geruchsfiltereinheit zwischen den Filterabschnitten ungefiltert passiert, verhindert werden. Die Geruchsfiltereinheit nimmt also zuverlässiger die Geruchsstoffe auf. Das Verbindungselement kann den Zwischenraum insbesondere zu der Seite hin verschließen, die im eingebauten Zustand der Geruchsfiltereinheit im Wesentlichen senkrecht zu einer Durchströmungsrichtung des ersten Filtersegments und/oder des zweiten Filtersegments liegt. Der Zwischenraum kann zwischen dem ersten Filterrahmen und dem zweiten Filterrahmen und/oder zwischen dem ersten Filterabschnitt und dem zweiten Filterabschnitt gebildet sein. Der Zwischenraum kann insbesondere als Spalt vorliegen, ist allerdings nicht auf eine bestimmte räumlich geometrische Form beschränkt.

Das Verbindungselement kann in einer ersten Durchströmungsrichtung des ersten Filtersegments zu einer Außenseite des ersten Filtersegments hin versetzt an dem ersten Filterrahmen verbunden sein. Durch die versetzte Anordnung kann das erste Filtersegment weiter geschwenkt werden, bevor es an das zweite Filtersegment stößt. Vorzugsweise kann das Verbindungselement zusätzlich in einer zweiten Durchströmungsrichtung des zweiten Filtersegments zu einer Außenseite des zweiten Filtersegments hin versetzt an dem zweiten Filterrahmen verbunden sein. Das Verbindungselement kann mit einem Randabschnitt des ersten Filterrahmens und/oder einem Randabschnitt des zweiten Filterrahmens verbunden sein. Das Verbindungselement kann an einer in der ersten Durchströmungsrichtung am weitesten außen liegenden Seite des ersten Filtersegments mit dem ersten Filterrahmen verbunden sein. Gleichermaßen kann das Verbindungselement an einer in der zweiten Durchströmungsrichtung am weitesten außen liegenden Seite des zweiten Filtersegments mit dem zweiten Filterrahmen verbunden sein. Diese am weitesten versetzte Anordnung des Verbindungselement kann ein vollständiges Umschlagen der beiden Filtersegmente bereitstellen.

Ferner wird vorgeschlagen, dass die Geruchsfiltereinheit ein mit dem ersten Filtersegment verbundenes, vorzugsweise längliches, Verbindungsglied zur Vereinfachung einer Entnahme aus der Dunstabzugsvorrichtung und/oder zur Absturzsicherung aufweist, wodurch ein Bedienkomfort weiter gesteigert werden kann. Das Verbindungsglied kann reversibel verformbar ausgebildet sein. Das Verbindungsglied kann eine Schnur, ein Band oder einen Strang aufweisen. Das Verbindungsglied kann ferner einen Griff aufweisen. Das Verbindungsglied kann mit seinem einen Ende an dem ersten Filtersegment verbunden sein und an seinem anderen dazu entgegengesetzten Ende den Griff aufweisen. Der Griff kann zusätzlich eine Abdeckung zum Abdecken einer Absaugöffnung der Dunstabzugsvorrichtung bilden. Der Benutzer kann durch ein Ziehen an dem Griff die Geruchsfiltereinheit entnehmen, ohne hierbei mit seiner Hand in ein Inneres des Abzugsgehäuses hineingreifen zu müssen.

Ferner wird eine Dunstabzugsvorrichtung mit einem Abzugsgehäuse, das eine Absaugöffnung aufweist, und der Geruchsfiltereinheit vorgeschlagen. Das Abzugsgehäuse hat einen Aufnahmeabschnitt zum Aufnehmen der Geruchsfiltereinheit. Die Geruchsfiltereinheit ist durch die Absaugöffnung in den Aufnahmeabschnitt einbringbar und aus diesem entnehmbar.

Bei der Dunstabzugsvorrichtung kann die erfindungsgemäße Geruchsfiltereinheit selbst, wenn ein enger Durchgang einem zwischen der Absaugöffnung und dem Aufnahmeabschnitt vorliegt, einfach eingebracht und entnommen werden. Die Dunstabzugsvorrichtung kann also insgesamt besonders kompakt ausgeführt werden, ohne dass Nachteile bei einer Filterleistung oder einer Handhabung beim Austausch der Geruchsfiltereinheit auftreten.

Der Aufnahmeabschnitt kann insbesondere dazu eingerichtet sein, die Geruchsfiltereinheit in dem eingebauten Zustand zu tragen. Der Aufnahmeabschnitt kann ferner zumindest eine Strömungsbarriere aufweisen, welche einen Zwischenraum zwischen dem ersten Filtersegment und dem zweiten Filtersegment in einem eingebauten Zustand der Geruchsfiltereinheit verschließt. Durch einen solchen Aufnahmeabschnitt kann eine Fehlluft, welche ungefiltert an den Filtersegmenten vorbeiströmt, verhindert werden. Die Strömungsbarriere bildet eine Barriere für eine Strömung und kann insbesondere nicht durchströmbar ausgebildet sein. Die Strömungsbarriere kann durch eine Strebe gebildet sein, die im eingebauten Zustand der Geruchsfiltereinheit mit deren Zwischenraum überlappt. Die Strömungsbarriere soll insbesondere ein Umströmen der Filterabschnitte der Geruchsfiltereinheit verhindern. Der Aufnahmeabschnitt kann also eine tragende Funktion und gleichzeitig eine Funktion als Strömungsbarriere haben.

Der Aufnahmeabschnitt kann in einem eingebauten Zustand der Geruchsfiltereinheit das erste Filtersegment winklig zu dem zweiten Filtersegment halten. Hierdurch kann das Abzugsgehäuse schmaler ausgestaltet werden, ohne dabei eine Filterfläche zu verringern. Zwischen dem ersten Filtersegment und dem zweiten Filtersegment kann also in dem eingebauten Zustand ein Winkel liegen, der bevorzugt größer als 10° und kleiner als 170° ist, sodass das erste Filtersegment in dem eingebauten Zustand geneigt zu dem zweiten Filtersegment angeordnet ist.

Der Aufnahmeabschnitt und die Geruchsfiltereinheit können dazu eingerichtet sein, ein Einbringen der Geruchsfiltereinheit in den Aufnahmeabschnitt durch ein Verschwenken des ersten Filtersegments relativ zu dem zweiten Filtersegment in eine Schwenkrichtung zu gestatten und durch ein Verschwenken in eine zur Schwenkrichtung entgegengesetzte weitere Schwenkrichtung zu verhindern. Die Geruchsfiltereinheit ist somit nur in einer korrekten Ausrichtung in den Aufnahmeabschnitt einbringbar. Der Aufnahmeabschnitt und die Geruchsfiltereinheit können also derart zusammenwirken, dass eine fehlerhafte Montage durch den Benutzer verhindert oder zumindest von dem Benutzer erkannt wird.

Die Dunstabzugsvorrichtung kann dabei Teil, insbesondere eine Unterbaugruppe, einer Dunstabzugshaube oder eines Muldenlüfter sein, wobei die Dunstabzugsvorrichtung zusätzlich ein Gebläse, insbesondere umfassend ein Gebläserad, einen Gebläsemotor zu einem Antreiben des Gebläserads, und/oder eine Steuereinheit aufweist. Das Gebläse kann als Radialgebläse oder als Axialgebläse ausgeführt sein.

Die Dunstabzugsvorrichtung kann insbesondere dazu eingerichtet sein, den Wrasen in einem Umluftbetrieb abzusaugen und/oder zu filtrieren. Der Umluftbetrieb ist insbesondere der Betrieb, bei dem die abgesaugt Luft zusammen mit dem Wrasen, also die Abluft, durch eine Geruchsfiltereinheit gefiltert wird, um diese frei von dem Benutzer störenden Gerüchen in eine Umgebung zurückzuführen. Im Gegensatz dazu wird der Wrasen beim Betrieb der Dunstabzugsvorrichtung in einem Abluftbetrieb zu einer Außenseite, vorzugsweise ohne Durchströmen der Geruchsfiltereinheit, durch eine Verrohrung ins Freie abgegeben.

Die Dunstabzugsvorrichtung kann ferner eine Fettfiltereinheit aufweisen, die in dem Abzugsgehäuse angeordnet ist. Die Fettfiltereinheit ist stromaufwärts von der Geruchsfiltereinheit angeordnet, sodass der eingesaugte Wrasen zuerst die Fettfiltereinheit passiert, bevor er die Geruchsfiltereinheit erreicht. Die Fettfiltereinheit kann insbesondere Fettpartikel aus dem Wrasen entfernen, um ein Verschmutzen der Dunstabzugsvorrichtung im Betrieb durch Fettpartikel zu verhindern. Vorzugsweise sind die Fettfiltereinheit und die Geruchsfiltereinheit in der Dunstabzugsvorrichtung im Betrieb beabstandet zueinander angeordnet, sodass der Wrasen möglichst ungehindert durch die Fettfiltereinheit und die Geruchsfiltereinheit strömen kann.

In einer
vorteilhaften Ausgestaltung können sowohl die Dunstabzugshaube als auch der Muldenlüfter wahlweise in dem Umluftbetrieb oder dem Abluftbetrieb betrieben werden. Der Muldenlüfter kann zur Integration in ein Kochfeld vorgesehen sein und insbesondere Teil des Kochfelds sein. Der Muldenlüfter kann hierbei an einer Kochfeldplatte oder neben einer Kochfeldplatte in das Kochfeld integriert sein.

Unter "eingerichtet" soll speziell ausgestattet und/oder programmiert verstanden werden. Darunter, dass eine Einheit dazu eingerichtet ist, eine bestimmte Funktion wahrzunehmen, soll verstanden werden, dass die Einheit diese Funktion in zumindest einem Betriebszustand auch tatsächlich wahrnimmt.

Die Begriffe "oberhalb", "unterhalb", "unten" und "oben" beziehen sich jeweils auf die übliche Einbaulage der Dunstabzugsvorrichtung. Die genannten Begriffe sind insbesondere bezüglich der Schwerkraftrichtung zu verstehen.

Die hierin offenbarten Vorrichtungen, Systeme und Verfahren sollen hierbei nicht auf die oben beschriebene Anwendung und Ausführungsform beschränkt sein. Insbesondere können diese zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

Es wird insbesondere darauf hingewiesen, dass alle in Bezug auf eine Vorrichtung beschriebenen Merkmale und Eigenschaften, sinngemäß auf Verfahren übertragbar und im Sinne der Erfindung einsetzbar und als mitoffenbart gelten.

Im Folgenden wird die vorliegende Erfindung anhand der beigefügten Figuren beispielhaft beschrieben. Die Zeichnungen, die Beschreibung und die Ansprüche enthalten zahlreiche Merkmale in Kombination. Der Fachmann wird die Merkmale zweckmäßigerweise auch einzeln betrachten und im Rahmen der Ansprüche sinnvoll in Kombination verwenden.

Falls von einem bestimmten Objekt mehr als ein Exemplar vorhanden ist, ist ggf. nur eines davon in den Figuren und in der Beschreibung mit einem Bezugszeichen versehen. Die Beschreibung dieses Exemplars kann entsprechend auf die anderen Exemplare von dem Objekt übertragen werden. Sind Objekte insbesondere mittels Zahlenwörtern, wie beispielsweise erstes, zweites, drittes Objekt etc. benannt, dienen diese der Benennung und/oder Zuordnung von Objekten. Demnach können beispielsweise ein erstes Objekt und ein drittes Objekt, jedoch kein zweites Objekt umfasst sein. Allerdings könnten anhand von Zahlenwörtern zusätzlich auch eine Anzahl und/oder eine Reihenfolge von Objekten ableitbar sein.

Es zeigen:
- Fig. 1: eine Draufsicht eines Muldenlüfters mit einer Dunstabzugsvorrichtung,
- Fig. 2: eine Schnittdarstellung der Dunstabzugsvorrichtung bei einer Entnahme einer Geruchsfiltereinheit,
- Fig. 3: eine Schnittdarstellung eines Muldenlüfters mit einer Dunstabzugsvorrichtung bei einer Entnahme einer Geruchsfiltereinheit gemäß einer weiteren Ausführungsform,
- Fig. 4: eine perspektivische Schnittdarstellung einer Geruchsfiltereinheit zur Verwendung in den Ausführungsformen gemäß Fig. 1 bis 3,
- Fig. 5: eine Schnittdarstellung der Geruchsfiltereinheit,
- Fig. 6: eine Schnittdarstellung einer Geruchsfiltereinheit gemäß einer weiteren Ausführungsform,
- Fig. 7: eine Schnittdarstellung einer Dunstabzugshaube mit einer Dunstabzugsvorrichtung mit einer Geruchsfiltereinheit in einem eingebauten Zustand, und
- Fig. 8: eine Schnittdarstellung der Dunstabzugsvorrichtung mit der Geruchsfiltereinheit in einem fehlerhaft eingeführten Zustand.

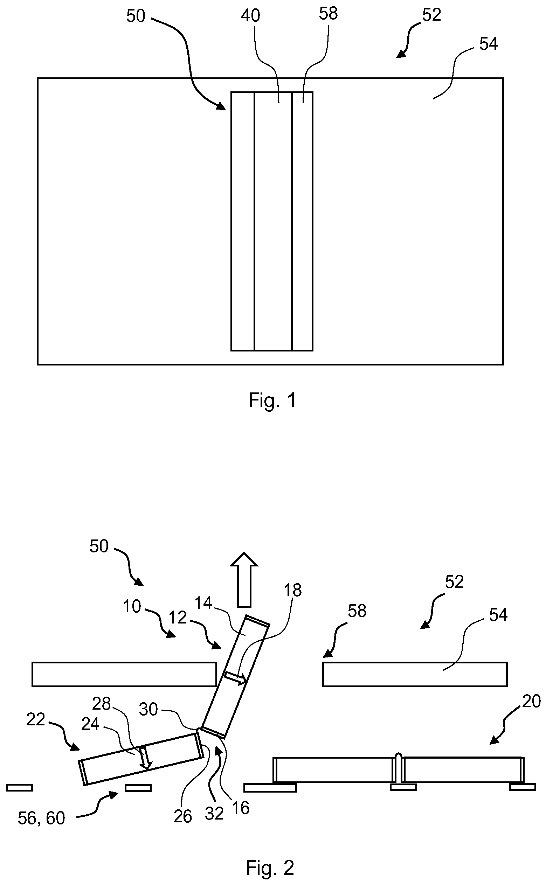

Figur 1 zeigt einen Muldenlüfter mit einer Dunstabzugsvorrichtung 50. Die Dunstabzugsvorrichtung 50 ist beispielhaft an einer Kochfeldplatte 54 in ein Kochfeld 52 integriert. Die Dunstabzugsvorrichtung 50 umfasst eine Absaugöffnung 58 zum Absaugen von Wrasen und eine Abdeckung 40 zum teilweisen Abdecken der Absaugöffnung 58 in einem inaktiven Zustand. Zur Absaugung des Wrasens weist die Dunstabzugsvorrichtung 50 ein nicht dargestelltes Gebläse auf.

Die beispielhaft beschriebene Dunstabzugsvorrichtung 50 wird in einem Umluftbetrieb betrieben. Der Umluftbetrieb ist insbesondere der Betrieb, bei dem eine angesaugte Luft durch eine Geruchsfiltereinheit 10 der Dunstabzugsvorrichtung 50 gefiltert wird, um diese frei von dem Benutzer störenden Gerüchen in eine Umgebung zurückzuführen. Im Gegensatz zu einem Abluftbetrieb, bei dem die angesaugte Luft ins Freie abgegeben wird, ist bei dem Umluftbetrieb keine Verrohrung ins Freie erforderlich.

Figur 2 zeigt eine Schnittdarstellung der Dunstabzugsvorrichtung 50 bei einer Entnahme der Geruchsfiltereinheit 10 zu Regenerationszwecken. Die Dunstabzugsvorrichtung 50 umfasst ein Abzugsgehäuse 56, das die Absaugöffnung 58 aufweist, die Geruchsfiltereinheit 10 und eine nicht dargestellte Fettfiltereinheit, die entnehmbar stromauf der Geruchsfiltereinheit 10 angeordnet ist. Das Abzugsgehäuse 56 hat einen Aufnahmeabschnitt 60 zum Aufnehmen der Geruchsfiltereinheit 10. Die Geruchsfiltereinheit 10 ist durch die Absaugöffnung 58 von oben in den Aufnahmeabschnitt 60 einbringbar und aus diesem entnehmbar.

Die Geruchsfiltereinheit 10 umfasst ein steifes erstes Filtersegment 12, ein steifes zweites Filtersegment 22 und ein reversibel verformbares Verbindungselement 30, welches sich zwischen dem ersten Filtersegment 12 und dem zweiten Filtersegment 22 erstreckt und beide miteinander und relativ zueinander beweglich verbindet. Die Geruchsfiltereinheit 10 umfasst optional weitere Filtersegmente 20, die im Wesentlichen baugleich zu dem ersten und zweiten Filtersegment 12, 22 sind. Bei der vorliegend beispielhaften Geruchsfiltereinheit 10 sind die weitere Filtersegmente 20 nicht mit dem ersten Filtersegment 12 und dem zweiten Filtersegment 22 verbunden. Dies ist jedoch denkbar. Eine solche Verbindung kann entweder über ein weiteres reversibel verformbaren Verbindungselement erfolgen oder über beliebig anders ausgestaltete Verbindungen.

Die Geruchsfiltereinheit 10 kann in die kompakt ausgestaltete Dunstabzugsvorrichtung 50, welche enge Räume aufweist, einfach eingebracht und entnommen werden. Durch das Verbinden der Filtersegmente 12, 22 bzw. das Aneinanderketten der Filtersegmente 12, 22 kann insbesondere das zweite Filtersegment 22, das sich an einer schwierig erreichbaren Stelle innerhalb der Dunstabzugsvorrichtung 50 befindet, durch Ziehen an dem einfacher erreichbaren ersten Filtersegment 12 entnommen werden. Das reversibel verformbare Verbindungselement 30 ermöglicht hierbei eine Biegung zwischen dem ersten Filtersegment 12 und dem zweiten Filtersegment 22, welche das Einbringen in die Dunstabzugsvorrichtung 50 und das Entnehmen aus dieser vereinfacht, wie dies insbesondere in Figur 2 gezeigt ist. Der über dem ersten Filtersegment 12 dargestellte Pfeil stellt hierbei eine Richtung des Ziehens dar, in welcher der Benutzer an dem ersten Filterelement 12 für das Entnehmen ziehen kann, um das erste Filtersegment 12 zusammen mit dem zweiten Filtersegment 22 zu entnehmen.

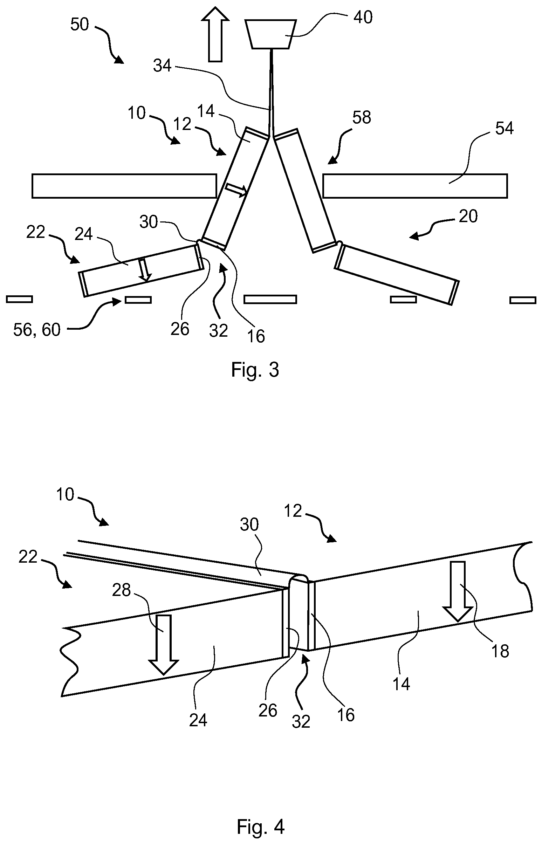

Figur 3 zeigt eine Schnittdarstellung einer Dunstabzugsvorrichtung 50 bei einer Entnahme einer Geruchsfiltereinheit 10 gemäß einer weiteren Ausführungsform. Die Geruchsfiltereinheit 10 hat zusätzlich ein mit einem ersten Filtersegment 12 verbundenes längliches Verbindungsglied 34, welches vorliegend insbesondere als ein Entnahmeglied ausgebildet ist, zur Vereinfachung einer Entnahme aus der Dunstabzugsvorrichtung 50. Das Verbindungsglied 34 ist reversibel verformbar ausgebildet und weist eine Schnur auf. Das Verbindungsglied 34 ist mit seinem einen Ende mit dem ersten Filtersegment 12 verbunden und weist an seinem anderen dazu entgegengesetzten Ende einen Griff auf, der durch die Abdeckung 40 gebildet ist. Der Benutzer kann diese Geruchsfiltereinheit 10 durch ein Ziehen an dem Griff entnehmen, der von dem Benutzer einfacher zu erreichen und zu greifen ist als das erste Filtersegment 12. Wie in Figur 3 beispielhaft dargestellt, kann das Verbindungsglied 34 eine weitere Schnur aufweisen, die mit einem der weiteren Filtersegmente 20 verbunden ist, sodass diese ebenfalls durch das Ziehen an dem Griff entnommen werden können.

Figur 4 zeigt eine perspektivische Schnittdarstellung der Geruchsfiltereinheit 10. Die Filtersegmente 12, 22 sind zur Abscheidung von Geruchsstoffen aus dem Wrasen geeignet und vorliegend baugleich. Das erste Filtersegment 12 hat einen ersten Filterabschnitt 14 und einen steifen ersten Filterrahmen 16, der den ersten Filterabschnitt 14 aufnimmt. Das zweite Filtersegment 22 hat einen zweiten Filterabschnitt 24 und einen steifen zweiten Filterrahmen 26, der den zweiten Filterabschnitt 24 aufnimmt. Das Verbindungselement 30 erstreckt sich zwischen dem ersten Filterrahmen 16 und dem zweiten Filterrahmen 26 und verbindet beide miteinander und beweglich relativ zueinander. Die Filtersegmente 12, 22 sind also durch die steifen Filterrahmen 16, 26 steif ausgebildet.

Der erste Filterrahmen 16 und der zweite Filterrahmen 26 umrahmen jeweils den zugeordneten ersten oder zweiten Filterabschnitt 14, 24 vollständig. Der erste Filterrahmen 16 und der zweite Filterrahmen 26 umrahmen die Filterabschnitte 14, 24 derart, dass die Filterabschnitte 14, 24 in einer jeweiligen Durchströmungsrichtung 18, 28 frei durchströmbar sind. Das Verbindungselement 30 verbindet das erste Filtersegment 12 und das zweite Filtersegment 22 zu einer Kette aus Filtersegmenten. Die Geruchsfiltereinheit 10 kann zusätzlich zu den weiteren Filtersegmenten 20 auch weitere baugleiche Filtersegmente und weitere baugleiche Verbindungselemente aufweisen, die die Kette aus Filtersegmenten beliebig verlängern.

Das beispielhaft dargestellte Verbindungselement 30 ist für die bewegliche Verbindung der Filtersegmente 12, 22 als Lasche ausgebildet. Das Verbindungselement 30 ist dabei einstückig mit dem ersten Filterrahmen 16 und einstückig mit dem zweiten Filterrahmen 26 ausgebildet. Das Verbindungselement 30, der erste Filterrahmen 16 und der zweite Filterrahmen 26 bilden zusammen ein Festkörpergelenk, um den ersten Filterrahmen 16 und den zweiten Filterrahmen 26 miteinander und relativ zueinander schwenkbar zu verbinden. Alternativ dazu können das erste Filtersegment 12 und das zweite Filtersegment 22 auch lösbar miteinander verbunden sein. Dies kann beispielsweise durch eine Schnappverbindung zwischen dem Verbindungselement 30 und dem ersten Filtersegment 12 und/oder dem zweiten Filtersegment 22 ausgeführt sein. Die einstückige Ausgestaltung ist lediglich ein Beispiel, wie das erste Filtersegment 12 und das zweite Filtersegment 22 durch das Verbindungselement 30 miteinander und beweglich zueinander verbunden sind.

Zwischen dem ersten Filtersegment 12 und dem zweiten Filtersegment 22 ist ein Zwischenraum 32 gebildet, den das Verbindungselement 30 zu einer Seite hin verschließt. Das Verbindungselement verhindert damit eine Strömung durch den Zwischenraum 32 in einer senkrecht zu der Seite erstreckende Richtung. Hierdurch kann eine Fehlluft, welche die Geruchsfiltereinheit zwischen den Filterabschnitten 14, 24 ungefiltert passiert, verändert werden. Der Zwischenraum 32 ist zu der Seite hin verschlossen, die senkrecht zu der ersten Strömungsrichtung 18 des ersten Filtersegment 12 und senkrecht zu der zweiten Strömungsrichtung 28 des zweiten Filtersegments 22 liegt. Der Zwischenraum 32 liegt beispielhaft als Spalt vor. Die räumlich geometrische Form des Zwischenraums 32 ist hierauf jedoch nicht beschränkt und kann beliebig eine beliebige Form aufweisen, solange die bewegliche Verbindung zwischen den Filtersegmenten gegeben ist.

Das Verbindungselement 30 ist in der ersten Durchströmungsrichtung 18 des ersten Filtersegment 12 zu einer Außenseite des ersten Filtersegment 12 hin versetzt an dem ersten Filterrahmen 16 verbunden. Insbesondere ist das Verbindungselement 30 an einer in der ersten Durchströmungsrichtung 18 am weitesten außen liegenden Seite des ersten Filtersegments 12 mit dem ersten Filterrahmen 16 verbunden. Das Verbindungselement 30 ist in der zweiten Durchströmungsrichtung 18 des zweiten Filtersegment 22 zu einer Außenseite des zweiten Filtersegment 22 hin versetzt an dem zweiten Filterrahmen 26 verbunden. Insbesondere ist das Verbindungselement 30 an einer in der zweiten Durchströmungsrichtung 28 am weitesten außen liegenden Seite des zweiten Filtersegments 22 mit dem zweiten Filterrahmen 26 verbunden.

Der Aufnahmeabschnitt 60 ist, wie in Figur 2 dargestellt, dazu eingerichtet, die Geruchsfiltereinheit 10 in dem eingebauten Zustand zu tragen. Der Aufnahmeabschnitt 60 bildet dabei eine Strömungsbarriere, welche den Zwischenraum 32 zwischen dem ersten Filtersegment 12 und dem zweiten Filtersegment 22 in dem eingebauten Zustand der Geruchsfiltereinheit 10 verschließt. Der Aufnahmeabschnitt 60 verhindert dadurch, vorliegend zusätzlich zu dem als Lasche ausgebildeten Verbindungselement 30, eine Fehlluft, welche ungefiltert an den Filtersegmenten 12, 22 vorbeiströmt. Der Aufnahmeabschnitt 60 umfasst insbesondere eine aus Streben gebildete Strömungsbarriere, die neben einer Funktion als Barriere für eine Strömung auch eine tragende Funktion hat. Vorliegend überlappt eine der Streben den Zwischenraum 32 im eingebauten Zustand der Geruchsfiltereinheit 10.

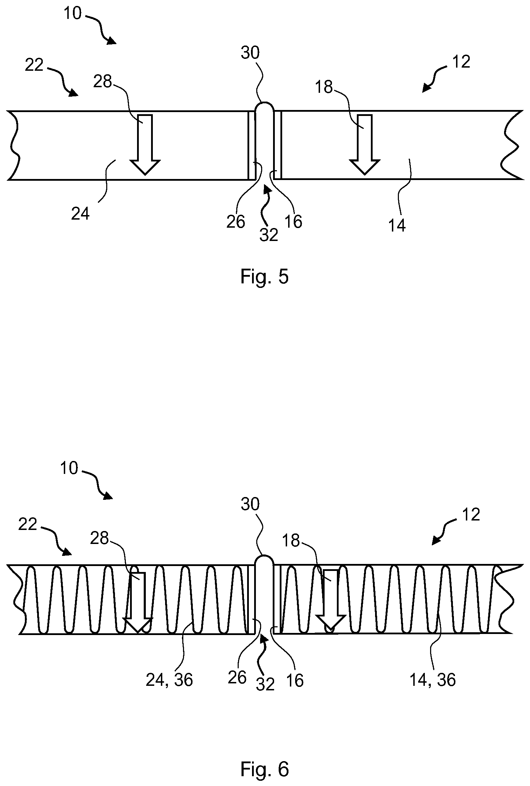

Figur 5 zeigt eine Schnittdarstellung der Geruchsfiltereinheit 10. Der erste Filterabschnitt 14 und der zweite Filterabschnitt 24 sind dazu eingerichtet, Geruchsstoffe aus dem Wrasen abzuscheiden, wodurch beim Kochen entstehende unangenehme Gerüche beseitigt werden. Der erste Filterabschnitt 12 und der zweite Filterabschnitt 22 umfassen hierfür beispielhaft jeweils einen Aktivkohlefilter.

Figur 6 zeigt eine Schnittdarstellung einer Geruchsfiltereinheit 10 gemäß einer weiteren Ausführungsform. Die Geruchsfiltereinheit 10 weist die gleichen Merkmale wie die zuvor beschriebene Geruchsfiltereinheit 10 auf, wobei Filterabschnitte 14, 24 jeweils einen plissierten Abschnitt 36 aufweisen. Der plissierte Abschnitt 36 ist vorliegend beispielhaft als plissierte Aktivkohlefilter gebildet. Die Plissierung ist dabei so ausgerichtet, dass der Wrasen in der jeweiligen Durchströmungsrichtung 18, 28 ungehindert in den plissierten Aktivkohlefilter einströmen kann.

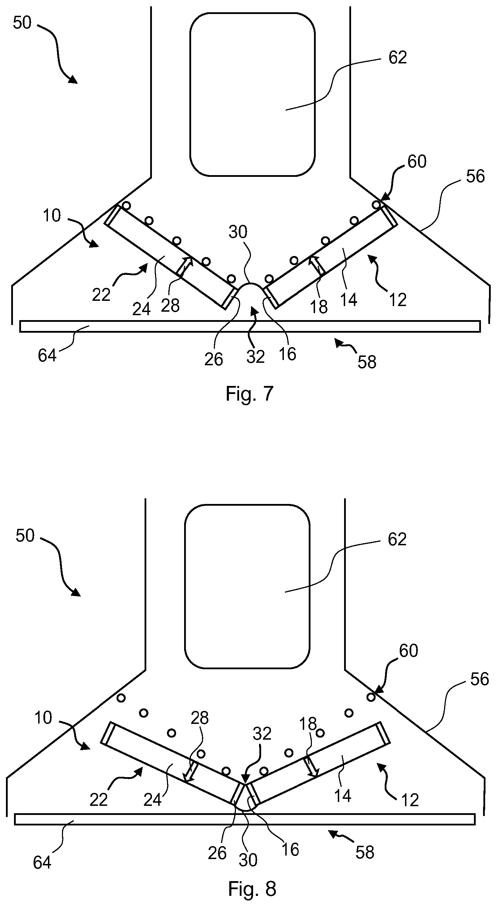

Figur 7 zeigt eine Schnittdarstellung einer Dunstabzugshaube mit einer Dunstabzugsvorrichtung 50 mit einer Geruchsfiltereinheit 10 in einem eingebauten Zustand. Figur 8 zeigt eine Schnittdarstellung der Dunstabzugshaube ausgeführten Dunstabzugsvorrichtung 50 mit der Geruchsfiltereinheit 10 in einem fehlerhaft eingeführten Zustand.

Die Dunstabzugsvorrichtung 50 umfasst ein Abzugsgehäuse 56, das eine nach unten gerichtete Absaugöffnung 58 aufweist, die Geruchsfiltereinheit 10 und eine entnehmbare Fettfiltereinheit 64, die stromauf der Geruchsfiltereinheit 10 in dem Abzugsgehäuse 56 angeordnet ist. Ein eingesaugter Wrasen kann somit zuerst die Fettfiltereinheit 64 passieren, bevor diese die Geruchsfiltereinheit 10 erreicht. Die Dunstabzugsvorrichtung 50 umfasst ferner ein Gebläse 62 zum Einsaugen des Wrasens. Das Gebläse 62 ist in dem Abzugsgehäuse 56 stromab der Fettfiltereinheit 64 und der Geruchsfiltereinheit 10 angeordnet. Die Fettfiltereinheit 64 entfernt insbesondere Fettpartikel aus dem Wrasen, um ein Verschmutzen der Dunstabzugsvorrichtung 50 im Betrieb durch Fettpartikel zu verhindern. Die Geruchsfiltereinheit 10 und die Fettfiltereinheit 64 sind für eine möglichst ungehinderte Durchströmung des Wrasens beabstandet zueinander angeordnet. Die Dunstabzugsvorrichtung 50 hat ferner einen Aufnahmeabschnitt 60 zum Aufnehmen der Geruchsfiltereinheit 10. Die Geruchsfiltereinheit 10 ist durch die Absaugöffnung 58 von unten in den Aufnahmeabschnitt 60 einbringbar und aus diesem entnehmbar. Der Aufnahmeabschnitt 60 ist dazu eingerichtet, die Geruchsfiltereinheit 10 in dem eingebauten Zustand, vorliegend beispielhaft hängend, zu tragen.

Der Aufnahmeabschnitt 60 hält in dem eingebauten Zustand der Geruchsfiltereinheit 10 das erste Filtersegment 12 winklig zu dem zweiten Filtersegment 22, wobei zwischen dem ersten Filtersegment 12 und dem zweiten Filtersegment 22 beispielhaft ein Winkel von 110° liegt, sodass das erste Filtersegment 12 geneigt zu dem zweiten Filtersegment 22 angeordnet ist.

Der Aufnahmeabschnitt 60 und die Geruchsfiltereinheit 10 ist dazu eingerichtet, dass die Geruchsfiltereinheit 10 durch Biegung des ersten Filtersegments 12 relativ zu dem zweiten Filtersegment 22 in einer Biegerichtung in den Aufnahmeabschnitt 60 einbringbar ist, wie dies in Figur 7 gezeigt ist, und durch Biegung in einer entgegengesetzten Biegerichtung nicht in Aufnahmeabschnitt 60 einbringbar ist, wie dies in Figur 8 gezeigt ist. Die Geruchsfiltereinheit 10 ist somit nur in einer korrekten Ausrichtung in den Aufnahmeabschnitt 60 einbringbar. Der Aufnahmeabschnitt 60 und die Geruchsfiltereinheit 10 wirken also derart zusammen, dass ein fehlerhaftes Einführen der Geruchsfiltereinheit 10, wie dieser in Figur 8 gezeigt ist, verhindert wird. Der Benutzer kann die Geruchsfiltereinheit 10 lediglich in der einen Biegerichtung weit genug biegen, um die Geruchsfiltereinheit 10 in den eingebauten Zustand, wie dies in Figur 7 gezeigt ist, zu bringen, da das Verbindungselement 30 jeweils versetzt mit den Filtersegmenten 12, 22 verbunden ist. Durch die versetzte Anordnung des Verbindungselements 30 stoßen die Filtersegmente 12, 22 bei der Biegung in die entgegengesetzte Biegerichtung bereits bei einem geringen Biegewinkel aneinander. Im Gegensatz dazu kann bei der Biegung in der Biegerichtung, wie dies in Figur 7 gezeigt ist, ein höherer Biegewinkel erreicht werden, bevor die Filtersegmente 12, 22 aneinanderstoßen. Hierdurch kann die fehlerhafte Montage durch den Benutzer, wie in Figur 8 gezeigt, verhindert oder zumindest für den Benutzer erkennbar gemacht werden.

Die in Figur 7 dargestellte Dunstabzugsvorrichtung 50 kann optional mit einem nicht dargestellten länglichen Verbindungsglied versehen sein, um eine Absturzsicherung zu bilden. Ein derartiges Verbindungsglied kann eine Schnur aufweisen, die mit ihrem einen Ende an dem ersten Filtersegment 12 verbunden ist und mit ihrem anderen dazu entgegengesetzten Ende mit dem Abzugsgehäuse 56 verbunden ist. Falls sich die Geruchsfiltereinheit 10 unbeabsichtigt aus dem Aufnahmeabschnitt 60 lösen sollte, kann das derartig ausgestaltete Verbindungsglied einen Absturz der Geruchsfiltereinheit 10 und somit einen Aufprall zusammen mit der Fettfiltereinheit 64 auf ein darunter befindliches Kochfeld verhindern.

### Bezugszeichen

- 10: Geruchsfiltereinheit
- 12: erstes Filtersegment
- 14: erster Filterabschnitt
- 16: erster Filterrahmen
- 18: erste Durchströmungsrichtung
- 20: weitere Filtersegmente
- 22: zweites Filtersegment
- 24: zweiter Filterabschnitt
- 26: zweiter Filterrahmen
- 28: zweite Durchströmungsrichtung
- 30: Verbindungselement
- 32: Zwischenraum
- 34: Verbindungsglied
- 36: plissierter Abschnitt
- 40: Abdeckung
- 50: Dunstabzugsvorrichtung
- 52: Kochfeld
- 54: Kochfeldplatte
- 56: Abzugsgehäuse
- 58: Absaugöffnung
- 60: Aufnahmeabschnitt
- 62: Gebläse
- 64: Fettfiltereinheit

## Patentansprüche

1. Geruchsfiltereinheit (10) für eine Dunstabzugsvorrichtung (50), umfassend:
- ein steifes erstes Filtersegment (12),
- ein steifes zweites Filtersegment (22) und
- ein reversibel verformbares Verbindungselement (30), welches sich zwischen dem ersten Filtersegment (12) und dem zweiten Filtersegment (22) erstreckt und beide miteinander und relativ zueinander beweglich verbindet.

2. Geruchsfiltereinheit (10) nach Anspruch 1, **dadurch gekennzeichnet, dass** das erste Filtersegment (12) einen ersten Filterabschnitt (14) und einen steifen ersten Filterrahmen (16), der den ersten Filterabschnitt (14) aufnimmt, aufweist, und das zweite Filtersegment (22) einen zweiten Filterabschnitt (24) und einen steifen zweiten Filterrahmen (26), der den zweiten Filterabschnitt (24) aufnimmt, aufweist, wobei das Verbindungselement (30) sich zwischen dem ersten Filterrahmen (16) und dem zweiten Filterrahmen (26) erstreckt und beide miteinander und relativ zueinander beweglich verbindet.

3. Geruchsfiltereinheit (10) nach Anspruch 2, **dadurch gekennzeichnet, dass** das Verbindungselement (30) in einer ersten Durchströmungsrichtung (18) des ersten Filtersegments (12) zu einer Seite des ersten Filtersegments (12) hin versetzt mit dem ersten Filterrahmen (16) verbunden ist, und das Verbindungselement (30) in einer zweiten Durchströmungsrichtung (28) des zweiten Filtersegments (22) zu einer Seite des zweiten Filtersegments (22) hin versetzt mit dem zweiten Filterrahmen (26) verbunden ist.

4. Geruchsfiltereinheit (10) nach Anspruch 2 oder 3, **dadurch gekennzeichnet, dass** das Verbindungselement (30) ein Festkörpergelenk zwischen dem ersten Filterrahmen (16) und dem zweiten Filterrahmen (26) bildet.

5. Geruchsfiltereinheit (10) nacheinem der vorhergehenden Ansprüche, **dadurch gekennzeichnet, dass** zwischen dem ersten Filtersegment (12) und dem zweiten Filtersegment (22) ein Zwischenraum (32) gebildet ist, den das Verbindungselement (30) zumindest zu einer Seite hin verschließt.

6. Geruchsfiltereinheit (10) nach einem der vorhergehenden Ansprüche, **gekennzeichnet durch** ein mit dem ersten Filtersegment (12) verbundenes längliches Verbindungsglied (34) zur Vereinfachung einer Entnahme aus der Dunstabzugsvorrichtung (50) und/oder zur Absturzsicherung.

7. Geruchsfiltereinheit (10) nach einem der vorhergehenden Ansprüche, **dadurch gekennzeichnet, dass** das erste Filtersegment (12) und das zweite Filtersegment (22) baugleich sind.

8. Geruchsfiltereinheit (10) nach einem der vorhergehenden Ansprüche, **dadurch gekennzeichnet, dass** das erste Filtersegment (12) und das zweite Filtersegment (22) lösbar miteinander verbunden sind.

9. Dunstabzugsvorrichtung (50) umfassend:
- ein Abzugsgehäuse (56), das eine Absaugöffnung (58) aufweist, und
- eine Geruchsfiltereinheit (10) nach einem der vorstehenden Ansprüche,
wobei das Abzugsgehäuse (56) einen Aufnahmeabschnitt (60) zum Aufnehmen der Geruchsfiltereinheit (10) aufweist und die Geruchsfiltereinheit (10) durch die Absaugöffnung (58) in den Aufnahmeabschnitt (60) einbringbar und aus diesem entnehmbar ist.

10. Dunstabzugsvorrichtung (50) nach Anspruch 9, **dadurch gekennzeichnet, dass** der Aufnahmeabschnitt (60) zumindest eine Strömungsbarriere aufweist, welche einen Zwischenraum (32) zwischen dem ersten Filtersegment (12) und dem zweiten Filtersegment (22) in einem eingebauten Zustand der Geruchsfiltereinheit (10) verschließt.

11. Dunstabzugsvorrichtung (50) nach Anspruch 9 oder 10, **dadurch gekennzeichnet, dass** der Aufnahmeabschnitt (60) in einem eingebauten Zustand der Geruchsfiltereinheit (10) das erste Filtersegment (12) winklig zu dem zweiten Filtersegment (22) hält.

12. Dunstabzugsvorrichtung (50) nach Anspruch 11, **dadurch gekennzeichnet, dass** der Aufnahmeabschnitt (60) und die Geruchsfiltereinheit (20) dazu eingerichtet sind, ein Einbringen der Geruchsfiltereinheit (20) in den Aufnahmeabschnitt (60) durch ein Verschwenken des ersten Filtersegments (12) relativ zu dem zweiten Filtersegment (22) in eine Schwenkrichtung zu gestatten und durch ein Verschwenken in eine zur Schwenkrichtung entgegengesetzte weitere Schwenkrichtung zu verhindern.

13. Dunstabzugshaube mit einer Dunstabzugsvorrichtung (50) nach einem der Ansprüche 9 bis 12.

14. Muldenlüfter mit einer Dunstabzugsvorrichtung (50) nach einem der Ansprüche 9 bis 12.
